# EUROPEAN PATENT SPECIFICATION

(11) **EP 0 429 139 B1**
(45) Date of publication and mention of the grant of the patent: **11.06.1997**
(21) Application number: 90203049.3
(22) Date of filing: 19.11.1990
(51) Int. Cl.: G11B 7/00

(54) **Information recording and reading system, and recording device and reading device for use in such a system**
Informationsaufzeichen- und Informationslesesystem sowie Aufzeichnungsanordnung und Leseanordnung zur Verwendung in einem derartigen System
Système d'enregistrement et de lecture d'information ainsi que dispositif d'enregistrement et dispositif de lecture destinés à être utilisés dans un tel système

(30) Priority: 23.11.1989 NL 8902895
(43) Date of publication of application: 29.05.1991
(73) Proprietor: Philips Electronics N.V., 5621 BA Eindhoven (NL)
(72) Inventor: Roth, Rudolph, NL-5656 AA Eindhoven (NL); Van Offenbeek, Johannes Cornelis, NL-5656 AA Eindhoven (NL)
(74) Representative: Groenendaal, Antonius Wilhelmus Maria

(56) References cited:
- EP-A- 0 046 231
- GB-A- 2 122 406
- US-A- 4 413 289
- US-A- 4 853 921

## Description

The invention relates to an information recording and read system comprising scanning means for scanning a track on a record carrier of an inscribable type for the purpose of recording and reading information, the scanning speed during recording substantially corresponding to the scanning speed during reading, a recording device comprising recording means for recording information in the track at the scanning location, a read device comprising read means for reading the information recorded in the track at the scanning location.

The invention further relates to a recording device, recording method and read device for use in the system.

Such a system in the form of an optical recording and read system is known from the Applicant's EP-A 0,325,330 (PHN 12.399). Said application describes an optical recording and read system in which, for the purpose of recording and/or reading, the track of a disc-shaped optical record carrier is scanned by a radiation beam which is focused on the record carrier.

In order to enable the recording and read process to be optimised various servo arrangements are needed for scanning control. For example, optical recording and read devices comprise inter alia a tracking control for keeping the radiation beam on the track, a focus control for keeping the radiation being focused on the record carrier, and a speed control for controlling the scanning speed. The disturbances which affect the servo systems are mainly disturbances caused by imperfections of the record carrier, such as for example an eccentric position of the centre of rotation, non-circularity of the tracks and non-flatness of the record carrier. The width of the frequency spectrum of these disturbances strongly depends on the scanning speed, so that the optimum adaptation of the servo system to the disturbances to be handled also depends stongly on the scanning speed.

This dependence constitutes a problem if a recording and read device should process a digital signal, for example a digitised audio or video signal, whose bit rate, for example as a result of another digitising method or data compression, is lower than that for which the recording device has been designed originally. Maintaining the scanning speed at the original value during recording has the drawback that the information density on the record carrier, represented by the required length per data bit, decreases substantialy, so that the available storage capacity of the record carrier is utilised only partly.

Conversely, reducing the scanning speed has the drawback that the operation of the servo systems is no longer optimal.

It is an object of the invention to provide means enabling a recording and read system as defined in the opening paragraph to be adapted to record digitised information of a bit rate lower than that for which the device has been designed originally, without detriment to the information density of the record carrier and the performance of the servo systems.

To this end the recording and read system is characterized in that the recording device comprises an input buffer memory for, prior to recording, temporarily storing information to be recorded, recording control means for causing the recording to be interrupted, for causing the scanning location to jump to a preceding portion of the track, and for causing the recording process to be resumed when the track portion where the recording has been interrupted is reached again, in such a way that a degree of filling of the input buffer memory remains between specific limits, in that the read device comprises an output buffer memory for the temporary storage of the read information prior to the extraction of the read information, and read control means for causing the storage of the information read to be interrupted, for causing the scanning location to jump to a preceding track portion, and for causing the storage of the information read to be resumed when the track portion where storage has been interrupted is reached again in such a way that a degree of filling of the output buffer memory remains between specific limits. As a result of the above steps the scanning speed during recording and reading, using the same information density, has become independent of the speed with which the information to be recorded is received or with which the information read is supplied, so that at a scanning speed for which the operation of the servo systems is optimum the device in accordance with the invention is, in principle, capable of recording and/or reading information having a bit rate lower than the bit rate corresponding to the scanning speed.

It is to be noted that EP-A-0,196,590 describes a magneto-optical recording and read system in which the recording speed is equal to twice the speed with which the information is received and in which the difference in recording speed and receiving speed is compensated for by means of an input buffer memory. However, this concerns is a system in which each time before new information is recorded the recording speed is increased to provide time to perform an additional erase process on the track portion in which the new information is to be recorded. However, a result of the increased recording speed a difference arises in the scanning speed during recording and the scanning speed during reading, which adversely affects the performance of the servo systems.

Moreover, US 4,536,864 describes a read device for reading optical record carriers of the read only type, in which the reading speed of the record carrier is increased relative to the nominal reading speed, so that the speed of reading becomes higher than the speed with which the information is supplied. The difference between the reading speed and the information supply speed is compensated for by an output buffer memory. However, the object of increasing the reading speed is to reduce the susceptibility to shocks of the servo systems.

An embodiment of the system is characterized in that the the recording device comprises a modulator for modulating, prior to recording, an information signal which is representative of the information to be recorded, the read device comprising a demodulator for demodulating, after reading, a modulated information signal read, the recording device being adapted to store the non-modulated information signal in the input buffer memory and/or the read device being adapted to store the information signal read, which has already been demodulated, in the output buffer memory.

This embodiment advantageously utilises the fact that the number of bits in the unmodulated information signal is smaller than in the modulated information signal. Thus, for the storage of the unmodulated information signal a comparatively small storage capacity of the buffer memories is adequate. The last mentioned embodiment is particularly attractive for recording information in a track having a preformed track modulation representing the address information. Since in this embodiment the difference in receiving time and recording time of the information is compensated for by the temporary storage of the still non-modulated information signal it remains possible during recording to add the address information derived from the track modulation directly to the information signal during modulation. This is in contradistinction to a storage method in which the modulated information signal is stored temporarily.

When the recording process has been interrupted and resumed the phase of the recorded signal directly before the position where recording has been interrupted may not be contiguous to the phase of the recorded signal immediately after this point. During reading such a phase discontinuity (phase jump) of the recorded information may give rise to read errors. When a digitised audio or video signal is recorded to which redundant information has been added for the purpose of error correction, such as for example in the case of an audio signal digitised in conformity with a CD standard, these read errors caused by phase discontinuities do not present a real problem because in general such read errors can be corrected readily on the basis of the redundant information added to the signal.

An attractive embodiment of the system, which enables phase discontinuities and hence any adverse effects thereof to be reduced considerably, is characterized in that the recording means are clocked, the device further comprising synchronisation means for synchronising a clock signal for the control of the recording process with a data clock signal derived from information read from a track portion which is scanned prior to resumption of the recording.

Another embodiment of the system is characterized in that the device comprises address-generating means for supplying addresses which are indicative of the instantaneous scanning location, the recording control means and/or read control means being adapted to interrupt the recording and/or read process at an instant which is shifted by a predetermined time relative to the recording and/or read process of a synchronisation code included in the information, the recording and/or read control means comprising means for the storage of the address associated with the position of interruption of the recording or read process, and means for determining the position in the track where recording or reading should be resumed on the basis of the stored address and one of the synchronisation codes included in the information which is read prior to resumption. If for determining the point of interruption and resumption in the track use is made of the available address information and synchronisation codes the points where the information read out is interrupted can be selected independently of the points where recording of this information has been interrupted. This has the advantage that during reading the point where reading begins can be selected independently of the points where the information has been interrupted during recording. This is in contradistinction to the recording and read methods in which additional codes are added to the modulated information signal to indicate where recording and reading may be interrupted.

Further embodiments and the advantages thereof will now be described in detail with reference to Figs. 1 to 7, in which
Figs. 1 and 6 show embodiments of a recording and read system in accordance with the invention,
Figs. 2 and 4 are flow charts of control programs carried out by control units in recording and read systems in accordance with the invention,
Fig. 3 is a plan view of a record carrier to illustrate the invention,
Figs. 5a and 5b show modifications to the system shown in Fig. 2,
Fig. 7 shows a modification to the system illustrated in Fig. 6.

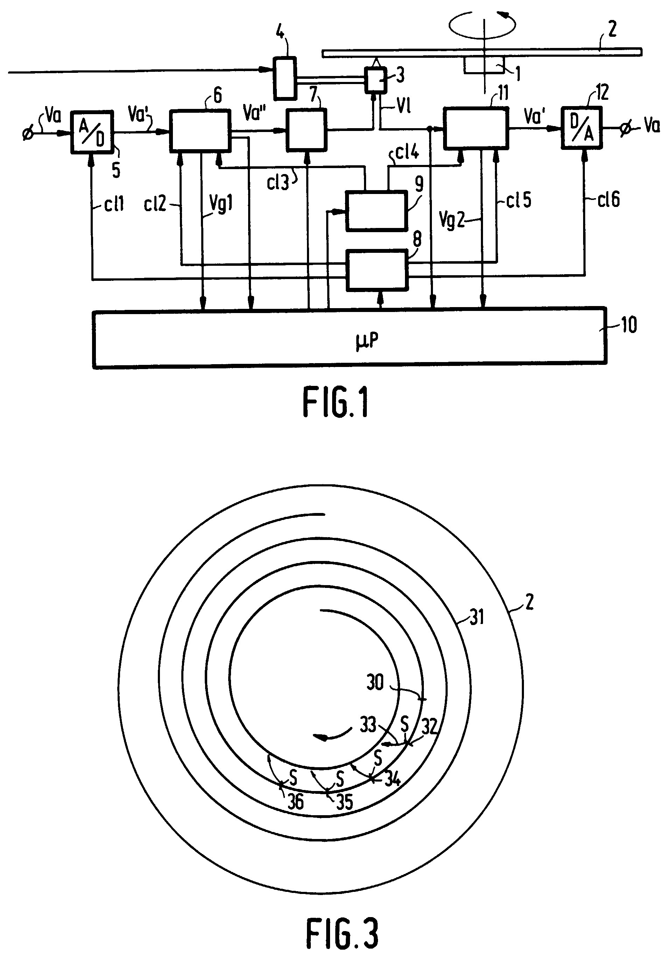

Fig. 1 shows a first embodiment of a recording and read system in accordance with the invention. The device comprises a motor 1 for rotating a disc-shaped record carrier 2 of an inscribable type about its axis, for example an optical record carrier having a spiral track. A read/write head 3 is arranged opposite the rotating record carrier 2. The read/write head 3 may comprise, for example, a customary optical read and write head by means of which a track on the record carrier 2 is scanned with a radiation beam for the purpose of reading and recording information. The system comprises a tracking system (not shown) of a customary type, which ensures that the centre of scanning location on the record carrier substantially coincides with the track centre. The device further comprises a focus control (not shown) for keeping the scanning beam in focus on the record carrier, a scanning-speed control system (not shown) of a customary type for controlling the speed with which the record carrier 2 is moved past the read/write head 3. By means of a radial positioning system 4 the read/write head 3 can be moved in a radial direction relative to the record carrier 2.

The recording and read system further comprises a circuit for digitising an analog signal Va, for example a clocked analog-to-digital converter 5. In addition to an analog/digital converter the circuit for digitising the analog signal may also comprise a digital processing circuit for compressing the digital signal appearing on the output of the analog-to-digital converter. Moreover, it is not necessary that the information to be recorded is presented in analog form. This information may also be presented in digital form and may be converted by a digital processing circuit, such as for example a standard digital audio interface circuit, prior to recording. When the analog-to-digital converter 5 is used the bit rate of the digitised signal Va' depends on the desired quality of the digitised signal, which is dictated inter alia by the number of bits per signal sample and the sampling rate. However, the use of data compression techniques may reduce the bit rate without a significant loss of quality. All this may result in the bit rate of the digitised signal being substantially lower than the bit rate of customary digitised signals such as a standard CD signal or a DAT signal. This means that the bit rate of the digitised signal to be recorded no longer corresponds to the bit rate of the signal for which the customary recording and read devices for digitised information have been designed. During recording this difference in bit rate can be compensated for by the use of an input buffer memory 6, for example of the First-In-First-Out (FIFO) type, which is arranged between the analog-to-digital converter 5 and a driver circuit 7 for the read/write head 3 and which is loaded at a rate corresponding to the bit rate of the digitised signal Va' on the output of the analog-to-digital converter 5, the information being read out of the memory to be applied to a data input of the driver circuit 7 at a rate corresponding to the scanning speed during recording.

For controlling the analog-to-digital conversion and the process of loading the input buffer memory 6 the device comprises a clock signal generator 8 for supplying a clock signal cl1 for the analog-to-digital converter 5 and a clock signal c12, which is related to clock signal cl1, for the input buffer memory 6. It is to be noted that the frequency of the clock signal cl1 dictates the bit rate of the digitised signal Va'.

A second clock signal generator 9 supplies a transfer clock signal c13 to the input buffer memory 6 for fetching the information from the input buffer memory 6, the transfer clock signal c13 having a frequency which is related to the scanning speed during recording. In order to minimise the storage capacity of the input buffer memory 6 the recording process can be controlled in such a way that when a specific upper limit of the degree of filling the input buffer memory 6 is exceeded an information output cycle is performed, in which the information stored in the input buffer memory 6 is fetched and is subsequently recorded. The cycle of fetching and recording the information is sustained until the degree of filling has come below a specific lower limit, after which the fetching and recording cycle is stopped until the degree of filling has again exceeded the upper limit. To realise such a control process the system comprises recording control means, which comprise for example a programmable control unit in the form of a microcomputer 10 loaded with a suitable program. The microcomputer 10 is coupled to the radial positioning system 4, by applying a control signal, it causes a radial jump of the scanning location in a radial direction by a specific number of tracks. The microcomputer is further coupled to the clock signal generators 8 and 9 for activating and de-activating the generation of the clock signals supplied by the generators 8 and 9. The microcomputer 10 also supplies a control signal to the driver circuit 7. The driver circuit 7 is constructed in such a way that depending upon the received control signal the read/write head 3 is set to the read mode or to the write mode. In the read mode the write/read head 3 supplies a read signal Vl which is representative of the information recorded in the track portion being scanned by the read/write head 3 at the scanning location. In the write mode the information received on the data input of the driver circuit 7 is recorded by means of the write/read head 3. For the purpose of controlling the recording process and the microcomputer 10 the input buffer memory 6 further supplies an indication signal Vg1 which is indicative of the degree of filling of the input buffer memory 6. Moreover, an output signal of the input buffer memory 6, which signal represents the information fetched from the input buffer memory, is applied to the microcomputer 10. Finally, the read/write head 3 is also coupled to the microcomputer 10 to supply the read signal Vl to the microcomputer 10.

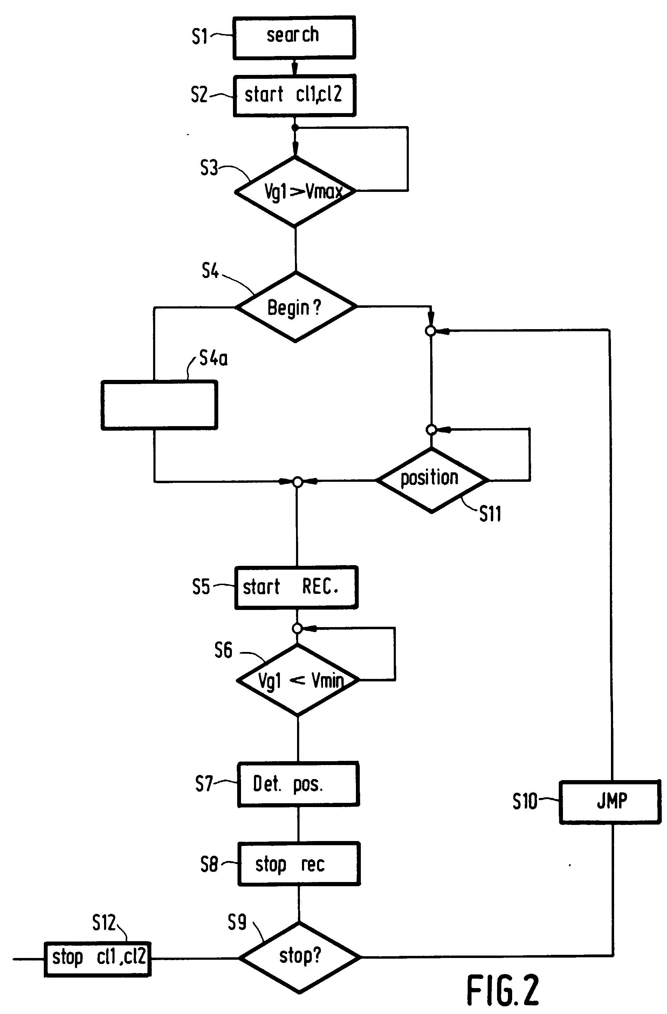

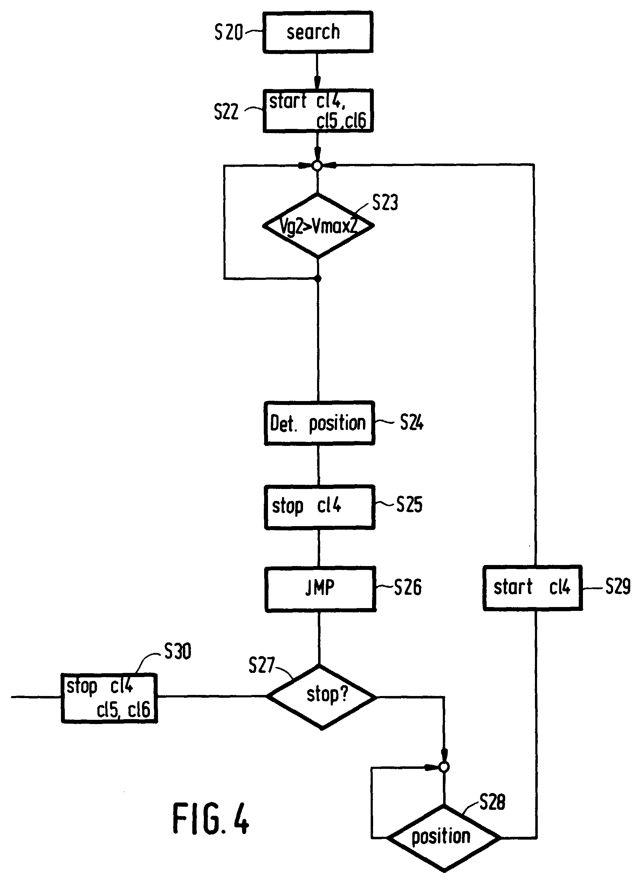

The method of controlling the recording process wil now be explained with reference to Fig. 2, which shows a flow chart of a suitable control program and Fig. 3, which is a plan view of said information carrier 2 and the track 31 on this information carrier.

The program, whose flow chart is shown in Fig. 2, comprises a step S1 which is performed if the analog information applied to the analog-to-digital converter 5 is to be recorded. During the step S1 the read/write head 3 is moved in a customary manner to a desired radial position where the recording should start and under control of the microcomputer 10. Subsequently, while the step S2 is performed, the analog-to-digital converter 5 is activated by activating the generation of the clock signal cl1. It is to be noted that it is not necessary to start analog-to-digital conversion after the read/write head 3 has reached the desired position. This may also be effected prior to the search for the desired position. The digitised information on the output is loaded into the input buffer memory 6 in synchronism with the load clock signal c12. After the step S2, while the step S3 is performed, it is ascertained on the basis of the indication signal Vg1 whether the degree of filling of the input buffer memory 6 has exceeded a specific value Vmax. Once the degree of filling has exceeded this value it is checked in the step S4 whether the information stored in the input buffer memory 6 concerns the first packet of information to be recorded. If this is the case, the track where recording can be started is located during the step S4a in a manner as described, for example, in European Patent Application EP-A-0,325,329 (PHQ 88.002). Subsequently, recording is started while the step S5 is performed. During the step S5 the generation of the transfer clock signal cl3 is activated, so that the information stored in the input buffer memory 6 is applied to the control circuit 7 in synchronism with the transfer clock signal cl3. Moreover, during the step S5 the read/write head 3 is set to the write mode, causing the information applied to the driver circuit to be recorded. By way of illustration the point where recording in the spiral track 31 begins is indicated by the reference numeral 30 in Fig. 3.

The speed with which the information is fetched from the input buffer store 6 is higher than the speed with which the input buffer memory 6 is loaded, so that the degree of filling of the input buffer memory 6 will decrease as recording proceeds. In the step S6 it is ascertained whether the degree of filling of the input buffer memory has decreased below a specific limit Vmin. If this is the case, the position in the track where recording is to be interrupted is determined during step S7. Moreover, the information specifying this position is stored for example, in the memory of the microcomputer 10. If the recorded information includes address information, the location where the recording is to be interrupted can be defined roughly by an address included in the information. The exact position of the interruption can be represented by a synchronisation code which is recorded at a predetermined position relative to the position of interruption. This synchronisation code may comprise a code which can be distinguished from the information and which for this purpose has been added to the information to be recorded. If the information to be recorded already includes synchronsation codes, such as for example the EFM synchronisation signals or the sub-code synchronisation signals in a standard CD signal, these are preferably used for indicating the exact position of the interruption of the recording. This can be achieved, for example, by interrupting the recording at a fixed instant after the next synchronisation code appearing after the degree of filling has dropped below the limit value Vmin. The actual interruption of the recording is realised in the step S8. In this step, at the instant at which the position is reached where the recording is to be interrupted, the read/write head 3 is set to the read mode and at the same time the transfer of the information from the input memory store 6 is discontinued by de-activating the generation of the transfer clock signal cl3. In Fig. 3 the point where the recording is interrupted in the track 31 bears the reference numeral 32. After the step S8 it is ascertained during the step S9 whether all the information packets have already been recorded. If this is not the case the step S10 is carried out, in which the read/write head is made to jump over one or more tracks to a turn of the spiral track which precedes the track portion in which a recording has been interrupted. In Fig. 3 this jump is indicated by an arrow 33. As a result of the radial jump a track portion is scanned which is situated before the point 32 where the recording has been interrupted. During the step S11 it is tested by means of the read signal Vl whether the point 32 is reached again. This is possible, for example, by comparing the address information obtained during reading with the stored address, which roughly indicates the position where the recording has been interrupted. Subsequently, the exact position of the interruption can be determined by detecting the next synchronisation code which appears in the read signal Vl after coincidence between the said addresses has been detected. Upon detection of the exact position of the interruption recording is resumed by performing the step S5. It is to be noted that instead of by means of the method described hereinbefore the instant of resuming can also be determined depending upon the degree of filling. For example, it is possible to postpone the resumption of the recording process until the degree of filling of the input buffer memory has exceeded a specific maximum value and, subsequently, to locate the point where the recording has been interrupted. During recording of the entire signal to be recorded the recording is each time interrupted temporarily at the positions indicated by the reference numerals 33, ..., 36 in the track 31. This process of interrupting and resuming the recording proceeds until in the step S9 the last packet of the information to be recorded is detected and the step S12 is performed. During the step S12 digitisation of the information applied to the analog-to-digital converter 15 and loading of the digitised information into the input buffer memory 6 is stopped by deactivation of the transfer clock signal cl2 and the clock signal cl1. It is to be noted that in general the input buffer memory will then not yet be completely empty. However, this is not problematic when audio signals are to be recorded, because it concerns only very brief signal portions. However, if the entire audio signal is to be recorded, the buffer memory can be replenished with a signal representing silence and the position where the recording is terminated can be selected in such a way that the instant of stopping appears while the signal representing this silent passage is recorded.

The recorded information can be read by scanning the track in which the information has been recorded with the read/write head 3, which should be set the read mode for this purpose. The read/write head 3 then supplies the read signal Vl which can be loaded into an output buffer memory 11 in synchronism with a load clock signal cl4 generated by the clock signal generator 9. The information loaded into the output buffer store 11 can be extracted in synchronism with a transfer clock signal cl5 generated by the clock signal generator 8. The extracted information is applied to a digital-to-analog converter 12, which is controlled by a clock signal cl6, which is also generated by the clock signal generator 8. The recorded information is available in analog form on the output of the digital-to-analog converter 12. The speed with which the track on the record carrier is scanned during reading of the recorded information is selected to be equal to the scanning speed during recording, so that the tracking control system can be optimised both for recording and for reading. The frequency of the transfer clock signal cl4 is selected in such a way that the speed with which the output buffer memory 11 is loaded corresponds to the scanning speed during information reading. The frequencies of the clock signals cl5 and cl6 are selected in such a way that the speed with which the analog information appears on the output of the digital-to-analog converter 12 corresponds to the speed with which this information is received by the analog-to-digital converter 5, so that upon reading a faithful reproduction of the recorded information is achieved. The information is read under control of the microcomputer 10, which is loaded with a program suitable for this purpose.

Fig. 4 is a flow chart of a suitable program. This program includes a step S20 in which under control of the microcomputer 10 the read/write head 3 is positioned opposite the track portion in which the information to be read has been recorded. Subsequently, in the step S22 reading is started by activating the generation of the clock signals cl4, cl5 and cl6. As a result of the activation of the clock signal generation the information read is loaded into the output buffer memory 11 with a speed corresponding to the read speed. The stored information is fetched from the output buffer memory 11 with a speed lower than the loading speed and is subsequently converted into analog form by the digital-to-analog converter 12. As a result of the difference between the fetching speed and the loading speed the degree of filling of the output buffer memory will increase. In the step S23 the degree of filling, which is indicated by an indication signal Vg2 generated by the output buffer memory 11, is compared with a maximum value Vmax2. When the degree of filling exceeds the maximum value the step S24 is carried out, in which the position is determined where loading of the information being read can be interrupted. This can be determined in a manner similar to the manner in which the interruption is determined during recording, on the basis of the address information which indicates the scanning position and of the synchronisation codes included in the recorded information. When this position is reached information reading and loading of the information in the output buffer memory 11 is discontinued in the step S25 by de-activating the generation of the clock signals cl5 and cl6. Subsequently, in the step S26 the scanning location is made to perform a radial jump to a turn of the spiral track which precedes the point where reading has been interrupted.

Subsequently, in the step S27 it is checked whether all the packets of the desired information have been read completely. If this is not the case, it is ascertained during step S28 on the basis of, for example, the address information and the synchronisation codes in the signals being read whether the point where reading has been interrupted is reached again. As soon as this point is reached, loading of the output buffer memory is resumed by activation of the clock signal cl4 in the step S29. After the step S29 the step S23 is repeated and loading of the information being read is interrupted again when the degree of filling of the output buffer memory again exceeds the value Vmax2.

This process of each time temporarily interrupting the storage of the information being read proceeds until during the step S27 it is ascertained that all the desired information has been read, after which the step S30 is performed, in which the extraction of information from the output buffer memory is discontinued by de-activating the generation of the clock signals cl5 and cl6 as soon as the output buffer is empty.

In the recording and read system described hereinbefore it is achieved that the scanning speed during recording and reading is independent of the speed with which the information is received or is to be supplied by the use of the buffer memories 6 and 11 and by controlling the recording and the reading process. By simply adding buffer memories and a simple-to-realise adaptation of the control program this enables an existing design of a recording and read device to be converted into a recording and read device by means of which digitised information can be recorded whose bit rate is lower than the bit rate of the digitised information for which the device has been designed originally.

When digital information is recorded it is often subjected to an additional modulation process prior to recording, in order to render the information to be recorded better suitable for recording. In general this means that the bit rate of the information after encoding will be higher than prior to modulation. The storage of the non-modulated signal and buffer memories is to be preferred over the storage of the modulated signal in the buffer memories because in the first case buffer memories having a smaller storage capacity can be used.

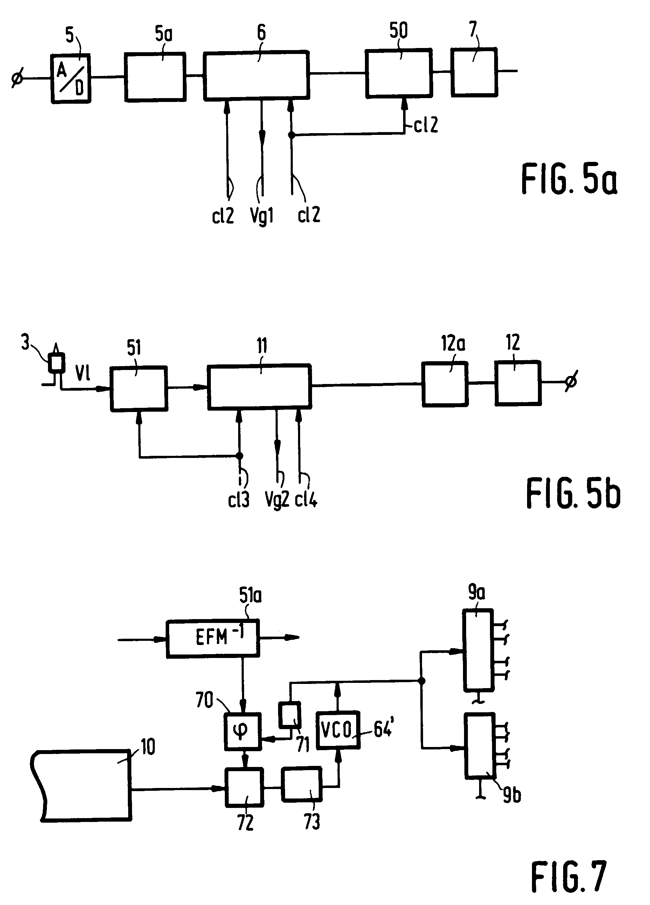

By way of illustration Fig. 5a and Fig. 5b show the preferred positions of the buffer memories in the case that the digitised information to be recorded is subjected to an additional modulation process. These Figures only show that part of the system which has been modified in comparison with the system shown in Fig. 1. In Fig. 5a these modifications pertain to a modulation circuit 50 for modulating the information fetched from the input buffer memory. The modulation circuit 50 should be de-activated or activated at the same instant at which loading of the output buffer memory 11 is interrupted and resumed respectively. This can be realised simply, for example by the use of a modulator which is clocked in synchronism with the load clock signal cl3. Further, by way of alternative Fig. 5a shows a digital data compression circuit 5a arranged between the analog-to-digital converter 5 and the input buffer memory.

The modifications shown in Fig. 5b pertain to a demodulation circuit 51 for demodulating of the information read before this information is applied to the output buffer memory 11. The demodulation circuit 51 should be rendered inoperative and operative at the same time that loading of the output buffer memory 11 is interrupted and resumed respectively. This can be realised simply, for example by the use of a demodulator which is clocked in synchronism with the load clock signal cl3. Fig. 5b, by way of alternative, shows a digital data decompression circuit 12a arranged between the output buffer memory 11 and the digital-to-analog converter 12.

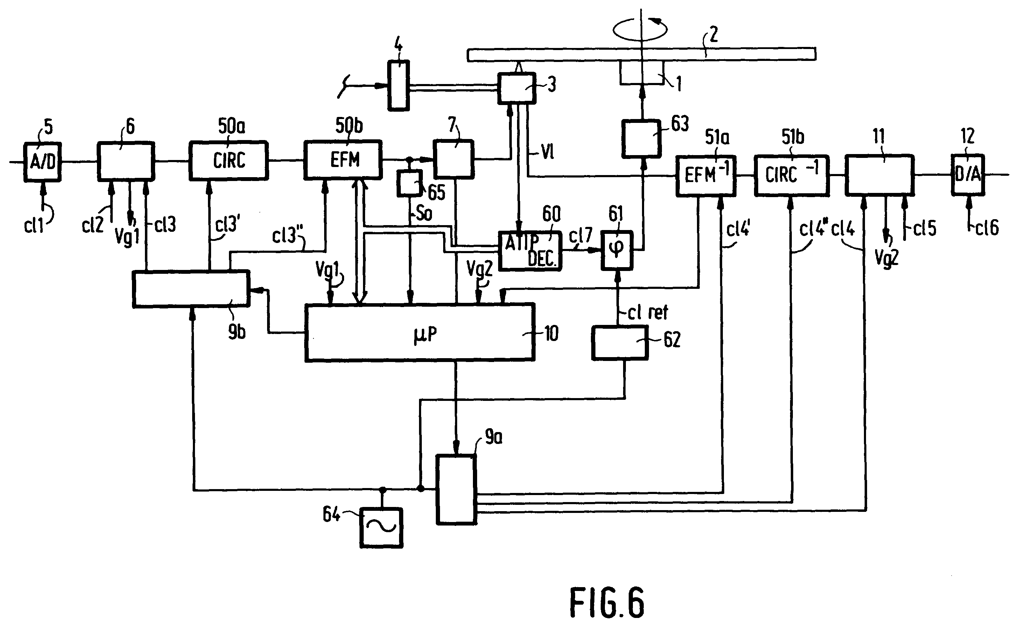

Fig. 6 shows another embodiment of a recording and read system in accordance with the invention for recording information modulated in conformity with a CD standard. The system shown is constructed to record information applied with another speed than that prescribed by the CD standard. Elements in Fig. 6 which correspond to elements in the embodiments described above bear the same reference numerals.

The system shown is adapted to record EFM modulated information at a scanning speed situated within the limits of 1.2 m/s to 1.4 m/s prescribed by the CD standard on an optical record carrier having a servo track which exhibits a preformed track modulation representing track addresses. Such a record carrier is known inter alia from EP-A 0,325,330.

For the purpose of detecting the address information represented by the track modulation the device comprises an ATIP decoder 60, which derives from the detection signal supplied by the optical read/write head 3 an address code of the same format as the address code included in a standard CD signal. Moreover, the ATIP decoder derives a clock signal cl7 of a frequency which is indicative of the scanning speed. Such an ATIP decoder 60 is described comprehensively in the above mentioned EP-A 0,325,330. By means of a phase detector 61 the phase of the clock signal cl7 is compared with the phase of a reference clock signal clref, whose frequency is indicative of the desired scanning speed. By means of the frequency divider 62 the reference clock signal clref is derived from a central oscillator 64. An output signal of the phase detector 61, which signal is indicative of the phase difference between the clock signals cl7 and clref, is applied to an energising circuit 63 for the motor 1. The energising circuit 63 is of a customary type which depending upon the detected phase difference controls the motor 1 in such a way that the phase difference remains substantially zero.

The modulator employed in the system shown in Fig. 6 comprises a customary CIRC encoder 50a and an EFM modulator 50b for converting digital information into EFM modulated information in accordance with a CD standard. The CIRC encoder 50a, the EFM modulator 50b and the input buffer memory 6 are controlled by a clock generator 9b which derives the required clock signals cl3, cl3', cl3" by frequency division from the output signal of the central oscillator 64. The clock signal generator 9b is of a controllable type which can be enabled and disabled by means of a control signal supplied by the microcomputer 10 to deactive and activate the generation of the clock signals. The EFM modulator 50b is also coupled to the ATIP decoder 60 for receiving address codes which are added to the modulated EFM modulated signal by the EFM modulator 50b, the additional address codes being inserted in the subcode channel of the EFM modulated information in a customary manner.

The demodulator used in the device shown in Fig. 6 comprises a customary CIRC decoder 51a and EFM demodulator 51b. The CIRC decoder 51a, the EFM demodulator 51b and the output buffer memory 11 are controlled by clock signals cl4', cl4" and cl4, which are derived by frequency division from the output signal of the central oscillator 64 by a clock signal generator 9a. The clock signal generator 9a is of a controllable type, which can be disabled and enabled by means of a control signal supplied by the microcomputer 10 to de-activate or activate the generation of the clock signals.

A recording and read process control is similar to that in the device shown in Fig. 1, except that the track positions where recording and/or loading of the output buffer memory 11 is/are interrupted and resumed is determined suitably on the basis of the subcode synchronisation codes present in the EFM signal and the address information supplied by the ATIP decoder 60. In that case the EFM signal need not be adapted and the positions where the recording is interrupted can be selected independently of the positions where the process of loading the output buffer memory is interrupted. For the purpose of detecting the subcode synchronisation code the device comprises a subcode synchronisation detector 65 for detecting the presence of subcode synchronisation codes in the output signal of the EFM modulator 50b. The output of the subcode synchronisation code detector 65 supplies a detection signal for the microcomputer 10 in response to every detection of a subcode synchronisation code. For the detection of the presence of subcode synchronisation codes in the read signal the subcode synchronisation detector normally present in the EFM demodulator 51a may be used.

Arranging the input buffer memory 6 before the EFM modulator 50b in the embodiment shown in Fig. 6 has an additional advantage. Indeed, as a result of this arrangement of the input buffer memory 6 the address codes supplied by the ATIP decoder 60 can be applied directly to the EFM modulator. This is in contrast to an embodiment in which the input buffer memory 6 is arranged after the EFM modulator 50b.

With respect to the position of the buffer memories it is to be noted that, in principle, the memories usually available in the CIRC encoder 50a and CIRC decoder 51b may be used, provided that their storage capacities are adequate. Alternatively, the buffer memories may be arranged between the CIRC encoder 50a and the EFM modulator 50b and between the EFM demodulator 51a and the CIRC decoder 51b. An essential feature is that the input buffer memory 6 is arranged in the data path before the modulator 50b and that the output buffer memory 11 is arranged in the data path after the demodulator 51a.

As a result of the temporary interruption and resumption of the recording process it may happen that the phase of the recorded signal exhibits a phase discontinuity at the location where the recording has been interrupted temporarily. During reading such a phase discontinuity may give rise to read errors. When information is recorded to which redundancy has been added for the purpose of error correction, such as for example in a standard CD signal, such read errors can generally be corrected without any problem. However, by comparatively simple means the magnitude of the phase discontinuity can be reduced by synchronising the clock signal, which is applied for the purpose of controlling the extraction of information from the buffer memory 6, with a data clock signal derived from the read signal obtained by scanning the track portion situated before the position where recording is to be resumed. This may be realised, for example, by adapting the system shown in Fig. 6 in a manner as shown in Fig. 7. The adaptation involves the use of a voltage controlled oscillator as the central oscillator 64. (The voltage controlled oscillator bears the reference numeral 64' in Fig. 7). The voltage controlled oscillator 64 is included in a phase locked loop circuit. The phase locked loop comprises a phase detector for comparing the phase of a data clock signal derived from the read signal vl by means of the EFM demodulator 51a, with the phase of a signal derived from the periodic output signal of the voltage controlled oscillator 64 by means of a frequency divider 71. An output signal of the phase detector 70 which is indicative of the phase difference between the signals thus compared is fed back to a control input of the voltage controlled oscillator 64' via an electronic switch 72, which is controlled by the microcomputer 10, and a loop filter 73 to adjust the frequency of the output signal of the oscillator 64'. By means of the electronic switch 72 the phase locked loop is opened or closed depending on the control signal supplied by the microcomputer 10. The synchronisation of the output signal of the voltage controlled oscillator 64, and hence the synchronisation of the clock signals cl3, cl3' and cl3" for controlling the recording process, with the data clock signal is achieved by opening the phase locked loop during the recording process and closing it briefly before recording is resumed under control of the microcomputer 10.

The invention has been illustrated hereinbefore for a recording and read system for rotating disc-shaped record carriers. However, it is to be noted that the use of the invention is not limited to recording and read systems for rotating disc-shaped record carriers. In principle, the invention may be employed in any recording and read system in which a scanning means can be moved to a previous portion of the track. Moreover, the use of the invention is not limited to optical recording and read systems but the invention may also be employed in magnetic recording and read systems.

Moreover, it is to be noted that the decision criteria on the basis of which the recording and/or read process is interrupted and resumed are not limited to the decision criteria described hereinbefore. For example, it is possible to interrupt the recording and/or read process always after reading or recording information from/in an integral number of turns of the spiral track. Moreover, it is also possible, for example, not to resume recording and/or reading until a minimum time interval has elapsed. It is always essential that the storage capacity is selected to be adequate to compensate for the resulting fluctuations in the amount of information stored.

Finally, it is to be noted that the invention is not limited to systems in which the recording device and the read device form an integrated unit. The invention may also embodied in systems comprising a separate recording device and a separate read device.

## Claims

1. An information recording and read system comprising scanning means (3) for scanning a track (31) on a record carrier (2) of an inscribable type for the purpose of recording and reading information, the scanning speed during recording substantially corresponding to the scanning speed during reading, a recording device comprising recording means for recording information in the track at the scanning location, a read device comprising read means for reading the information recorded in the track at the scanning location, characterized in that the recording device comprises an input buffer memory (6) for, prior to recording, temporarily storing information to be recorded, recording control means (10) for causing the recording to be interrupted, for causing the scanning location to jump to a preceding portion of the track (31), and for causing the recording process to be resumed when the track portion where the recording has been interrupted is reached again, in such a way that a degree of filling of the input buffer memory (6) remains between specific limits, in that the read device comprises an output buffer memory (11) for the temporary storage of the read information prior to the extraction of the read information, and read control means (10) for causing the storage of the information read to be interrupted, for causing the scanning location to jump to a preceding track portion, and for causing the storage of the information read to be resumed when the track portion where storage has been interrupted is reached again in such a way that a degree of filling of the output buffer memory remains between specific limits.

2. A system as claimed in Claim 1, characterized in that the recording device comprises a data compression coupled between a data input of the recorder and the input of the input buffer memory (6), and in that the read device comprises a data decompression circuit coupled between an output of the output buffer memory (11) and a data output of the read device.

3. A system as claimed in Claim 1 or 2, characterized in that the recording device comprises a modulator (50) for modulating, prior to recording, an information signal which is representative of the information to be recorded, the read device comprising a demodulator (51) for demodulating, after reading, a modulated information signal read, the recording device being adapted to store the non-modulated information signal in the input buffer memory (6) and/or the read device being adapted to store the information signal read, which has already been demodulated, in the output buffer memory (11).

4. A system as claimed in Claim 3, characterized in that the modulator (50) comprises means for adding address information to the information signal, the device further comprising means (60) for deriving the address information from a track modulation of the track being scanned and means for applying the address information to the modulator.

5. A system as claimed in any one of the preceding Claims, characterized in that the recording means are clocked, the device further comprising synchronisation means for synchronising a clock signal for the control of the recording process with a data clock signal derived from information read from a track portion which is scanned prior to resumption of the recording.

6. A system as claimed in any one of the preceding Claims, characterized in that the device comprises address-generating means for supplying addresses which are indicative of the instantaneous scanning location, the recording control means and/or read control means being adapted to interrupt the recording and/or read process at an instant which is shifted by a predetermined time relative to the recording and/or read process of a synchronisation code included in the information, the recording and/or read control means comprising means (10) for the storage of the address associated with the position of interruption of the recording or read process, and means for determining the position in the track where recording or reading should be resumed on the basis of the stored address and one of the synchronisation codes included in the information which is read prior to resumption.

7. A system as claimed in any one of the preceding Claims, characterized in that the scanning speed during recording and reading is between 1.2 and 1.4 metres per second.

8. An information recording device comprising scanning means (3) for scanning a track (31) on a record carrier (2) of an inscribable type for the purpose of recording information, and recording means for recording information in the track at the scanning location, characterized in that the recording device comprises a data compression circuit (5a), an input buffer memory (6), coupled to a data output of the data compression circuit, for, prior to recording, temporarily storing information to be recorded, and recording control means (10) for causing the recording to be interrupted, for causing the scanning location to jump to a preceding portion of the track (31) and for causing the recording process to be resumed when the track portion where the recording has been interrupted is reached again, in such a way that a degree of filling of the input buffer memory (6) remains between specific limits.

9. A recording device as claimed in Claim 8, characterized in that it comprises a modulator (50) for modulating, prior to recording, an information signal which is representative of the information to be recorded, the recording device being adapted to store the non-modulated information signal in the input buffer memory (6).

10. An information read device comprising scanning means (3) for scanning a track (31) on a record carrier (2) for the purpose of reading information, comprising read means for reading the information recorded in the track at the scanning location, characterized in that the read device comprises an output buffer memory (11) for the temporary storage of the read information prior to the extraction of the read information, a data decompression circuit (12a) coupled to a data output of the output buffer memory, and read control means (10) for causing the storage of the information read to be interrupted, for causing the scanning location to jump to a preceding track portion, and for causing the storage of the information read to be resumed when the track portion where storage has been interrupted is reached again in such a way that a degree of filling of the output buffer memory remains between specific limits.

11. An information reading device as claimed in Claim 10, characterized in that it comprises a demodulator (51) for demodulating, after reading, a modulated information signal read, the read device being adapted to store the information signal read, which has already been demodulated, in the output buffer memory (11).

12. Method for recording information on a record carrier (2) of an inscribable type comprising the step of scanning a track (31) on the record carrier, and the step of recording information in the track at the scanning location, characterized by the step of compressing information, the step of, prior to recording, temporarily storing the compressed information to be recorded in an input buffer memory (6), the step of interrupting the recording, the step of jumping the scanning location to a preceding portion of the track (31), and the step of resuming the recording process when the track portion where the recording has been interrupted is reached again, in such a way that a degree of filling of the input buffer memory (6) remains between specific limits.

## Patentansprüche

1. Informationsaufzeichnungs- und -lesesystem mit Abtastmitteln (3) zum Abtasten einer Spur (31) auf einem Aufzeichnungsträger (2) vom beschreibbaren Typ zum Aufzeichnen und Lesen von Informationen, wobei die Abtastgeschwindigkeit beim Aufzeichnen nahezu der Abtastgeschwindigkeit beim Lesen entspricht, wobei eine Aufzeichnungseinrichtung Aufzeichnungsmittel zum Aufzeichnen von Informationen in der Spur am Abtastort umfaßt und eine Leseeinrichtung Lesemittel zum Lesen der in der Spur am Abtastort aufgezeichneten Information umfaßt, dadurch gekennzeichnet, daß die Aufzeichnungseinrichtung einen Eingangspufferspeicher (6) umfaßt, zum vorübergehenden Speichern von aufzuzeichnender Information vor dem Aufzeichnen, Aufzeichnungssteuerungsmittel (10) zum Bewirken einer Unterbrechung des Aufzeichnens, zum Bewirken eines Springens des Abtastortes zu einem vorhergehenden Abschnitt der Spur (31) und zum Bewirken der Wiederaufnahme des Aufzeichnungsprozesses, wenn der Spurabschnitt, bei dem das Aufzeichnen unterbrochen worden ist, wieder erreicht worden ist, in solcher Weise, daß ein Füllungsgrad des Eingangspufferspeichers (6) innerhalb bestimmter Grenzen bleibt, daß die Leseeinrichtung einen Ausgangspufferspeicher (11) umfaßt zum vorübergehenden Speichern der gelesenen Information vor dem Extrahieren der gelesenen Information sowie Lesesteuerungsmittel (10) zum Bewirken der Unterbrechung der Speicherung der gelesenen Information, zum Bewirken eines Springens des Abtastortes zu einem vorhergehenden Spurabschnitt und zum Bewirken der Wiederaufnahme der Speicherung der gelesenen Information, wenn der Spurabschnitt, bei dem das Speichern unterbrochen worden ist, wieder erreicht worden ist, in solcher Weise, daß ein Füllungsgrad des Ausgangspufferspeichers innerhalb bestimmter Grenzen bleibt.

2. System nach Anspruch 1, dadurch gekennzeichnet, daß die Aufzeichnungseinrichtung eine zwischen einem Dateneingang des Aufzeichnungsgeräts und dem Eingang des Eingangspufferspeichers (6) angeschlossene Datenkomprimierungsschaltung umfaßt und daß die Leseeinrichtung eine zwischen einem Ausgang des Ausgangspufferspeichers (11) und einem Datenausgang der Leseeinrichtung angeschlossene Datendekomprimierungsschaltung umfaßt.

3. System nach Anspruch 1 oder 2, dadurch gekennzeichnet, daß die Aufzeichnungseinrichtung einen Modulator (50) umfaßt zum Modulieren, vor dem Aufzeichnen, eines Informationssignals, das für die aufzuzeichnende Information repräsentativ ist, wobei die Leseeinrichtung einen Demodulator (51) umfaßt zum Demodulieren, nach dem Lesen, eines gelesenen modulierten Informationssignals, wobei die Aufzeichnungseinrichtung zum Speichern des unmodulierten Informationssignals in dem Eingangspufferspeicher (6) eingerichtet ist und/oder die Leseeinrichtung zum Speichern des bereits demodulierten, gelesenen Informationssignals in dem Ausgangspufferspeicher (11) eingerichtet ist.

4. System nach Anspruch 3, dadurch gekennzeichnet, daß der Modulator (50) Mittel zum Hinzufügen von Adresseninformation zum Informationssignal umfaßt, wobei die Einrichtung weiterhin Mittel (60) umfaßt zum Ableiten der Adresseninformation aus einer Spurmodulation der abgetasteten Spur und Mittel zum Zuführen der Adresseninformation zum Modulator.

5. System nach einem der vorhergehenden Ansprüche, dadurch gekennzeichnet, daß die Aufzeichnungsmittel getaktet sind, wobei die Einrichtung weiterhin Synchronisationsmittel umfaßt zum Synchronisieren eines Taktsignals für die Steuerung des Aufzeichnungsprozesses mit einem Datentaktsignal, das aus Information abgeleitet worden ist, die aus einem vor der Wiederaufnahme der Aufzeichnung abgetasteten Spurabschnitt ausgelesen worden ist.

6. System nach einem der vorhergehenden Ansprüche, dadurch gekennzeichnet, daß die Einrichtung Adressengenerierungsmittel umfaßt zum Liefern von Adressen, die den momentanen Abtastort angeben, wobei die Aufzeichnungssteuerungsmittel und/ oder Lesesteuerungsmittel eingerichtet sind, den Aufzeichnungs- und/oder Leseprozeß zu einem Zeitpunkt zu unterbrechen, der relativ zum Aufzeichnungs- und/oder Leseprozeß für einen in der Information enthaltenen Synchronisationscode um eine vorbestimmte Zeit verschoben ist, wobei die Aufzeichnungs- und/oder Lesesteuerungsmittel Mittel (10) zum Speichern der zur Position der Unterbrechung des Aufzeichnungs- oder Leseprozesses gehörenden Adresse umfassen, und Mittel zum Bestimmen der Position in der Spur, bei der Aufzeichnen oder Lesen anhand der gespeicherten Adresse und eines der in der Information, die vor einer Wiederaufnahme gelesen worden ist, enthaltenen Synchronisationscodes wieder aufgenommen werden sollte.

7. System nach einem der vorhergehenden Ansprüche, dadurch gekennzeichnet, daß die Abtastgeschwindigkeit beim Aufzeichnen und Lesen zwischen 1,2 und 1,4 Meter pro Sekunde beträgt.

8. Informationsaufzeichnungseinrichtung mit Abtastmitteln (3) zum Abtasten einer Spur (31) auf einem Aufzeichnungsträger (2) vom beschreibbaren Typ zum Aufzeichnen von Informationen und mit Aufzeichnungsmitteln zum Aufzeichnen von Informationen in der Spur am Abtastort, dadurch gekennzeichnet, daß die Aufzeichnungseinrichtung eine Datenkomprimierungsschaltung (5a) umfaßt, einen mit einem Datenausgang der Datenkomprimierungsschaltung gekoppelten Eingangspufferspeicher (6) zum vorübergehenden Speichern von aufzuzeichnender Information vor dem Aufzeichnen sowie Aufzeichnungssteuerungsmittel (10) zum Bewirken einer Unterbrechung des Aufzeichnens, zum Bewirken eines Springens des Abtastortes zu einem vorhergehenden Abschnitt der Spur (31) und zum Bewirken der Wiederaufnahme des Aufzeichnungsprozesses, wenn der Spurabschnitt, bei dem das Aufzeichnen unterbrochen worden ist, wieder erreicht worden ist, in solcher Weise, daß ein Füllungsgrad des Eingangspufferspeichers (6) innerhalb bestimmter Grenzen bleibt.

9. Aufzeichnungseinrichtung nach Anspruch 8, dadurch gekennzeichnet, daß sie einen Modulator (50) umfaßt zum Modulieren, vor dem Aufzeichnen, eines Informationssignals, das für die aufzuzeichnende Information repräsentativ ist, wobei die Aufzeichnungseinrichtung zum Speichern des unmodulierten Informationssignals in dem Eingangspufferspeicher (6) eingerichtet ist.

10. Informationsleseeinrichtung mit Abtastmitteln (3) zum Abtasten einer Spur (31) auf einem Aufzeichnungsträger (2) zum Aufzeichnen und Lesen von Informationen, mit Lesemitteln zum Lesen der in der Spur am Abtastort aufgezeichneten Information, dadurch gekennzeichnet, daß die Leseeinrichtung einen Ausgangspufferspeicher (11) umfaßt zum vorübergehenden Speichern der gelesenen Information vor dem Extrahieren der gelesenen Information, eine mit einem Datenausgang des Ausgangspufferspeichers gekoppelte Datenkomprimierungsschaltung (12a) sowie Lesesteuerungsmittel (10) zum Bewirken einer Unterbrechung der Speicherung der gelesenen Information, zum Bewirken eines Springens des Abtastortes zu einem vorhergehenden Spurabschnitt und zum Bewirken der Wiederaufnahme der Speicherung der gelesenen Information, wenn der Spurabschnitt, bei dem das Speichern unterbrochen worden ist, wieder erreicht worden ist, in solcher Weise, daß ein Füllungsgrad des Ausgangspufferspeichers innerhalb bestimmter Grenzen bleibt.

11. Inforrnationsleseeinrichtung nach Anspruch 10, dadurch gekennzeichnet, daß sie einen Demodulator (51) umfaßt zum Demodulieren, nach dem Lesen, eines gelesenen modulierten Informationssignals, wobei die Leseeinrichtung zum Speichern des bereits demodulierten, gelesenen Informationssignals in dem Ausgangspufferspeicher (11) eingerichtet ist.

12. Verfahren zum Aufzeichnen von Informationen auf einem Aufzeichnungsträger (2) vom beschreibbaren Typ, mit dem Schritt des Abtastens einer Spur (31) auf dem Aufzeichnungsträger und dem Schritt des Aufzeichnens von Informationen in der Spur am Abtastort, gekennzeichnet durch den Schritt des Komprimierens von Informationen, den Schritt des vorübergehenden Speicherns, vor dem Aufzeichnen, der komprimierten aufzuzeichnenden Information in einem Eingangspufferspeicher (6), den Schritt des Unterbrechens des Aufzeichnens, den Schritt des Springens des Abtastortes zu einem vorhergehenden Abschnitt der Spur (31) und den Schritt der Wiederaufnahme des Aufzeichnungsprozesses, wenn der Spurabschnitt, bei dem das Aufzeichnen unterbrochen worden ist, wieder erreicht worden ist, in solcher Weise, daß ein Füllungsgrad des Eingangspufferspeichers (6) innerhalb bestimmter Grenzen bleibt.

## Revendications

1. Système d'enregistrement et de lecture d'informations comprenant un moyen de balayage (3) pour balayer une piste (31) sur un support d'enregistrement (2) de type inscriptible dans le but d'enregistrer et de lire des informations, la vitesse de balayage au cours de l'enregistrement correspondant sensiblement à la vitesse de balayage au cours de la lecture, un dispositif d'enregistrement comprenant un moyen d'enregistrement pour enregistrer des informations dans la piste à l'endroit de balayage, un dispositif de lecture comprenant un moyen de lecture pour lire l'information enregistrée dans la piste à l'endroit de balayage, caractérisé en ce que le dispositif d'enregistrement comprend une mémoire tampon d'entrée (6) pour stocker temporairement, avant l'enregistrement, l'information à enregistrer, un moyen de commande (10) d'enregistrement pour provoquer l'interruption de l'enregistrement, pour amener l'endroit de balayage à sauter vers une partie précédente de la piste (31), et pour provoquer la reprise du processus d'enregistrement lorsque la partie de piste, où l'enregistrement a été interrompu, est à nouveau atteinte, d'une façon telle qu'un degré de remplissage de la mémoire tampon d'entrée (6) reste dans des limites spécifiques, en ce que le dispositif de lecture comprend une mémoire tampon de sortie (11) pour le stockage temporaire de l'information lue avant son extraction, et un moyen de commande de lecture (10) pour provoquer l'interruption du stockage de l'information lue, pour amener l'endroit de balayage à sauter vers une partie de piste précédente, et pour provoquer la reprise du stockage de l'information lue lorsque la partie de piste, où le stockage a été interrompu, est à nouveau atteinte d'une façon telle qu'un degré de remplissage de la mémoire tampon de sortie reste dans des limites spécifiques.

2. Système suivant la revendication 1, caractérisé en ce que le dispositif d'enregistrement comprend un circuit de compression de données couplé entre une entrée de données de l'enregistreur et l'entrée de la mémoire tampon d'entrée (6), et en ce que le dispositif de lecture comprend un circuit de décompression de données couplé entre une sortie de la mémoire tampon de sortie (11) et une sortie de données du dispositif de lecture.

3. Système suivant la revendication 1 ou 2, caractérisé en ce que le dispositif d'enregistrement comprend un modulateur (50) pour moduler, avant l'enregistrement, un signal d'information qui est représentatif de l'information à enregistrer, le dispositif de lecture comprenant un démodulateur (51) pour démoduler, après lecture, un signal d'information modulé lu, le dispositif d'enregistrement étant à même de stocker le signal d'information non modulé dans la mémoire tampon d'entrée (6) et/ou le dispositif de lecture étant à même de stocker le signal d'information lu, qui a déjà été démodulé, dans la mémoire tampon de sortie (11).

4. Système suivant la revendication 3, caractérisé en ce que le modulateur (50) comprend un moyen pour ajouter de l'information d'adresse au signal d'information, le dispositif comprenant en outre un moyen (60) pour dériver l'information d'adresse d'une modulation de piste de la piste balayée et un moyen pour appliquer l'information d'adresse au modulateur.

5. Système suivant l'une quelconque des revendications précédentes, caractérisé en ce que les moyens d'enregistrement sont cadencés, le dispositif comprenant en outre un moyen de synchronisation pour synchroniser un signal d'horloge pour la commande du processus d'enregistrement avec un signal d'horloge d'information dérivé de l'information lue d'une partie de piste qui est balayée avant la reprise de l'enregistrement.

6. Système suivant l'une quelconque des revendications précédentes, caractérisé en ce que le dispositif comprend un moyen générateur d'adresses pour fournir des adresses qui sont indicatrices de l'endroit de balayage instantané, le moyen de commande d'enregistrement et/ou le moyen de commande de lecture étant à même d'interrompre le processus d'enregistrement et/ou de lecture à un instant qui est décalé d'un temps prédéterminé par rapport au processus d'enregistrement et/ou de lecture d'un code de synchronisation inclus dans l'information, les moyens de commande d'enregistrement et/ou de lecture comprenant un moyen (10) pour le stockage de l'adresse associée à la position de l'interruption du processus d'enregistrement ou de lecture, et un moyen pour déterminer la position dans la piste où l'enregistrement ou la lecture doit être repris sur la base de l'adresse stockée et d'un des codes de synchronisation inclus dans l'information qui est lue avant la reprise.

7. Système suivant l'une quelconque des revendications précédentes, caractérisé en ce que la vitesse de balayage au cours de l'enregistrement et de la lecture est comprise entre 1,2 et 1,4 m/s.

8. Dispositif d'enregistrement d'informations comprenant un moyen de balayage (3) pour balayer une piste (31) sur un support d'enregistrement (2) d'un type inscriptible dans le but d'enregistrer de l'information, et des moyens d'enregistrement pour enregistrer de l'information dans la piste à l'endroit de balayage, caractérisé en ce que le dispositif d'enregistrement comprend un circuit de compression de données (5a), une mémoire tampon d'entrée (6), couplée à une sortie de données du circuit de compression de données, pour stocker temporairement, avant l'enregistrement, l'information à enregistrer, et un moyen de commande d'enregistrement (10) pour provoquer l'interruption de l'enregistrement pour amener l'endroit de balayage à sauter vers une partie précédente de la piste (31) et pour provoquer la reprise du processus d'enregistrement lorsque la partie de piste, où l'enregistrement a été interrompu, est à nouveau atteinte, d'une façon telle qu'un degré de remplissage de la mémoire tampon d'entrée (6) reste dans des limites spécifiques.

9. Dispositif d'enregistrement suivant la revendication 8, caractérisé en ce qu'il comprend un modulateur (50) pour moduler, avant l'enregistrement, un signal d'information qui est représentatif de l'information à enregistrer, le dispositif d'enregistrement étant à même de stocker le signal d'information non modulé dans la mémoire tampon d'entrée (6).

10. Dispositif de lecture d'informations comprenant un moyen de balayage (3) pour balayer une piste (31) sur un support d'enregistrement (2) dans le but de lire de l'information, comprenant des moyens de lecture pour lire l'information enregistrée dans la piste à l'endroit de balayage, caractérisé en ce que le dispositif de lecture comprend une mémoire tampon de sortie (11) pour le stockage temporaire de l'information lue avant son extraction, un circuit de décompression de données (12a) couplé à une sortie de données de la mémoire tampon de sortie, et un moyen de commande de lecture (10) pour provoquer l'interruption du stockage de l'information lue, pour amener l'endroit de balayage à sauter vers une partie de piste précédente, et pour reprendre le stockage de l'information lue lorsque la partie de piste, où le stockage a été interrompu, est de nouveau atteinte, d'une façon telle qu'un degré de remplissage de la mémoire tampon de sortie reste dans des limites spécifiques.

11. Dispositif de lecture d'informations suivant la revendication 10, caractérisé en ce qu'il comprend un démodulateur (51) pour démoduler après lecture, un signal d'information modulé lu, le dispositif de lecture étant à même de stocker le signal d'information lu, qui a déjà été démodulé, dans la mémoire tampon de sortie (11).

12. Procédé d'enregistrement d'informations sur un support d'enregistrement (2) d'un type inscriptible, comprenant l'étape visant à balayer une piste (31) sur le support d'enregistrement, et l'étape visant à enregistrer de l'information dans la piste à l'endroit de balayage, caractérisé par l'étape visant à comprimer l'information, l'étape visant à stocker temporairement, avant enregistrement, l'information comprimée à enregistrer dans une mémoire tampon d'entrée (6), l'étape visant à interrompre l'enregistrement, l'étape visant à faire sauter l'endroit de balayage vers une partie précédente de la piste (31) et l'étape visant à reprendre le processus d'enregistrement lorsque la partie de piste, où l'enregistrement a été interrompu, est à nouveau atteinte, d'une façon telle qu'un degré de remplissage de la mémoire tampon d'entrée (6) reste dans des limites spécifiques.
